(19) Europäisches Patentamt

European Patent Office

Office européen des brevets

(11) EP 4 787 026 A1

## (12) EUROPEAN PATENT APPLICATION

(43) Date of publication:
05.08.2026 Bulletin 2026/32

(21) Application number: 25155077.8

(22) Date of filing: 30.01.2025

(51) International Patent Classification (IPC):
G02B 1/115 (2015.01)     G02B 1/116 (2015.01)
G02C 7/10 (2006.01)

(52) Cooperative Patent Classification (CPC):
G02B 1/116; G02B 1/115; G02C 7/104; G02C 7/107

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Carl Zeiss Vision International GmbH
73430 Aalen (DE)

(72) Inventors:
• Liang, Tiancheng
73430 Aalen (DE)
• Neuffer, Andreas
73430 Aalen (DE)
• von Blanckenhagen, Bernhard
73430 Aalen (DE)

(74) Representative: Carl Zeiss AG - Patentabteilung
Carl-Zeiss-Straße 22
73447 Oberkochen (DE)

## (54) SPECTACLE LENS COMPRISING AN ANTI-REFLECTIVE COATING

(57) The present invention relates to a spectacle lens comprising an anti-reflective coating, the anti-reflective reflective coating as defined in ISO 13666:2019(E), entry 3.18.3, said anti-reflective coating comprising a plurality of layers, said spectacle lens having, in an interval of angles of incidence, a residual reflectance colour in CIE 1976 L*a*b* colour space, the spectacle lens being characterized in that at an angle of incidence of 0°, positions of CIELAB a*,b* coordinates for said residual reflectance colour lie in a rectangular region in an a*,b* plane, said rectangular region in said a*,b* plane being defined by $2 \leq a^* \leq 9.2$ and $7 \leq b^* \leq 16.8$, in an interval of angles of incidence limited by an angle of incidence of $> 0°$ and an angle of incidence of 75°, each position of CIELAB a*, b* coordinates for said residual reflectance colour, in said a*,b* plane, has a value $D \geq 0$, with $D = b^* + 6.5 \cdot a^* + 6.5$, the CIELAB a*,b* coordinates are determined with respect to a single surface of said spectacle lens comprising said anti-reflective coating.

Figure 2

## Description

Field of the invention

The present invention relates to a spectacle lens according to the preamble of claim 1 and a method for calculating, by a computer, data of a spectacle lens according to the preamble of claim 7.

Related prior art

WO 2020/053140 A1 discloses an optical element comprising an interferometric reflection-reducing layer system on at least one surface of a substrate. The layer system comprises a stack of at least four successive layer packets. The layer system has a lightness L*, a chroma C* and a hue angle h of a residual reflection colour. An absolute value of a hue angle difference of the residual reflection colour in an interval of angles of incidence ranging from 0° and 30° is smaller than an absolute value of a chroma difference in said range of angles of incidence.

Problem to be solved

Based on WO 2020/053140 A1 disclosing an interferometric reflection-reducing layer system providing to an optical element a colour stable residual reflection colour for an interval of angles of incidence ranging from 0° to 30°, the problem underlying the present invention is to increase said interval of angles of incidence.

Summary of the invention

The problem is solved by the spectacle lens according to claim 1 and the method for calculating, by a computer, data of a spectacle lens according to claim 7.
The spectacle lens comprises an anti-reflective coating, the anti-reflective coating as defined in ISO 13666:2019(E), entry 3.18.3, said anti-reflective coating comprising a layer stack, said spectacle lens having, in an interval of angles of incidence, a residual reflectance colour in CIE 1976 L*a*b* colour space, the spectacle lens is characterized in that

at an angle of incidence of 0°, positions of CIELAB a*, b* coordinates for said residual reflectance colour lie in a rectangular region in an a*,b* plane, said rectangular region in said a*,b* plane being defined by $2 \leq a^* \leq 9.2$ and $7 \leq b^* \leq 16.8$,
in an interval of angles of incidence limited by an angle of incidence of > 0° and an angle of incidence of 75°, each position of CIELAB a*,b* coordinates for said residual reflectance colour, in said a*,b* plane, has a value $D \geq 0$, with $D = b^* + 6.5 \cdot a^* + 6.5$,
the CIELAB a*,b* coordinates are determined with respect to a single surface of said spectacle lens comprising said anti-reflective coating.

A "spectacle lens" is as defined in ISO 13666:2019(E), entry 3.5.2, an ophthalmic lens (3.5.1) an ophthalmic lens worn in front of, but not in contact with, an eyeball. A "surface" of the spectacle lens is at least one of a front surface of the spectacle lens and a back surface of the spectacle lens, the front surface of the spectacle lens as defined in ISO 13666:2019(E), entry 3.2.13, the back surface of the spectacle lens as defined in ISO 13666:2019(E), entry 3.2.14.
An "anti-reflective coating" is as defined in ISO 13666:2019(E), entry 3.18.3, a coating on a surface of the spectacle lens (3.5.2) intended to reduce light (3.1.2) reflected from its surfaces. As in note 1 to entry 3.18.3 of ISO 13666:2019(E), the anti-reflective coating may, for example, be combined with a clean coating (3.18.4), a hydrophobic coating (3.18.5) or an anti-static coating (3.18.3). Preferably, the anti-reflective coating is combined with the clean coating, preferable the clean coating having a water contact angle of greater than or equal to 100°. In case the anti-reflective coating is combined with the clean coating, preferably the anti-reflective coating is closer to the surface of the spectacle lens than the clean coating.
Preferably, the spectacle lens comprising the anti-reflective coating on a single surface thereof exhibits a luminous reflectance of $\leq 1.5$, the luminous reflectance as defined in ISO 13666:2019(E), entry 3.17.16. In case the spectacle lens is based on an optical material other than glass, i.e., in case the spectacle lens is based on a thermosetting hard resin or a thermoplastic hard resin, the anti-reflective coating preferably is combined with a hard coating, the optical material as defined in ISO 13666:2019(E), entry 3.3.1, the glass as defined in ISO 13666: 2019(E), entry 3.3.2, the thermosetting hard resin as defined in ISO 13666:2019(E), entry 3.3.3, the thermoplastic hard resin as defined in ISO 13666:2019(E), entry 3.3.4, and the hard coating as defined in ISO 13666:2019(E), entry 3.18.2. In case the anti-reflective coating is combined with the hard coating, preferably the hard coating is closer to the surface of the spectacle lens than the anti-reflective coating.

The anti-reflective coating comprises a layer stack, said layer stack comprises a plurality of layers. Preferably, each layer of said plurality of layers has a uniform refractive index. Preferably, adjacent layers in said layer stack have a different refractive index, each layer of said adjacent layers preferably has a uniform refractive index.

An "angle of incidence interval" is limited by an angle of incidence $\theta_1$ and an angle of incidence $\theta_2$, whereby the angle of incidence $\theta_2$ is larger than the angle of incidence $\theta_1$. The angle of incidence $\theta_1$ and the angle of incidence $\theta_2$ limiting the angle of incidence interval shall be included in said angle of incidence interval.

An "angle of incidence" is an angle between a ray of light incident on the surface of the spectacle lens at a point of incidence and a line perpendicular to said surface at said point of incidence.

A residual reflectance is expressed as a value of CIELAB lightness L* in CIE 1976 L*a*b* colour space. In particular the residual reflectance of the spectacle lens comprising the anti-reflective coating on a single surface of the spectacle lens is expressed as the value of CIELAB lightness L* in CIE 1976 L*a*b* colour space. The CIELAB lightness L* is as defined in ISO/CIE 11664-4:2019(E), entry 5.1. Preferably, the spectacle lens comprising the anti-reflective coating on a single surface of the spectacle lens has a value for the CIELAB lightness L* smaller than or equal to 15. Preferably, the CIELAB lightness L* is in one of the following ranges: range of from L* = 5 to L* = 15, a range of from L* = 7 to L* = 13, a range of from L* = 8 to L* = 11.

The CIELAB lightness L* for the residual reflectance is calculated using data of a spectral reflectance of the spectacle lens comprising the anti-reflective coating on a single surface of the spectacle lens. For calculating the CIELAB lightness L* for the residual reflectance, CIE standard illuminant D65 and a 10° observer are selected.

The spectral reflectance of the spectacle lens comprising the anti-reflective coating on a single surface of the spectacle lens is defined analogously as in ISO 13666:2019(E), entry 3.17.15, as ratio of a spectral radiant or luminous flux reflected by the surface of the spectacle lens comprising the anti-reflective coating to an incident spectral radiant or luminous flux at any specified wavelength, $\lambda$, for a specified angle of incidence.

At the angle of incidence of 0°, the spectral reflectance of the spectacle lens comprising on a single surface thereof the anti-reflective coating, preferably is measured with the Instrument F10-AR, Filmetrics, USA.

Alternatively, the spectral reflectance of the spectacle lens comprising the anti-reflective coating on a single surface of the spectacle lens is simulated as a function of wavelength, preferably using the software Optilayer (OptiLayer, OptiLayer 64 for Windows, Version 14.57, OptiLayer GmbH, Germany). For the simulation, preferably the refractive index of the optical material of the spectacle lens and the refractive incidences of the layers of the layer stack, a layer sequence of the layers in the layer stack as well as their respective layer thicknesses are taken into consideration. In case the spectacle lens comprises a hard coating and/or a primer hard coating, a respective layer thickness and a respective refractive index is also taken into consideration.

A "residual reflectance colour" is expressed as positions of CIELAB a*,b* coordinates in CIE 1976 L*a*b* colour space. In particular the residual reflectance colour of the spectacle lens comprising the anti-reflective coating on a single surface of the spectacle lens is expressed as positions of CIELAB a*,b* coordinates in CIE 1976 L*a*b* colour space. The "CIELAB a*,b* coordinates" are as defined in ISO/CIE 11664-4:2019(E), entry 5.1. The CIELAB a*,b* coordinates for the residual reflectance colour are calculated using data of the spectral reflectance of the spectacle lens comprising the anti-reflective coating on a single surface of the spectacle lens. For calculating the CIELAB a*,b* coordinates, the CIE standard illuminant D65 and the 10° observer are selected.

At the angle of incidence of 0°, positions of CIELAB a*,b* coordinates for the residual reflectance colour lie in a rectangular region in an a*,b* plane, said rectangular region in said a*,b* plane being defined by $2 \leq a^* \leq 9.2$ and $7 \leq b^* \leq 16.8$. In other words, at the angle of incidence of 0°, positions of CIELAB a*,b* coordinates for the residual reflectance colour lie in the rectangular region in the a*, b* plane, whereby said rectangular region in said a*,b* plane is defined by four corner point positions of CIELAB a*,b* coordinates:

a first corner point position of CIELAB a*,b* coordinates with a* = 2, b* = 16.8,
a second corner point position of CIELAB a*,b* coordinates with a* = 2, b* = 7,
a third corner point position of CIELAB a*,b* coordinates with a* = 9.2, b* = 7,
a fourth corner point position of CIELAB a*,b* coordinates with a* = 9.2, b* = 16.8.

The positions of CIELAB a*,b* coordinates are given, at the angle of incidence of 0°, for the residual reflectance colour of the spectacle lens comprising the anti-reflective coating on a single surface thereof.

When targeting a golden residual reflectance colour for the spectacle lens comprising on a single surface thereof the anti-reflective coating, the target golden residual reflectance colour has, with respect to CIE standard illuminant D65 and a 10° observer, a target value for the CIELAB lightness L* of 9, a target value for the CIELAB a* coordinate of 5.6 and a target value for the CIELAB b* coordinate of 11.9. Positions of CIELAB a*,b* coordinates that lie in the a*,b* plane, at the angle of incidence of 0°, in the rectangular region defined before, are assumed to be tolerable for providing said golden residual reflectance colour.

For comparison, at the angle of incidence of 0°, figure 17 of WO 2020/053140 A1 discloses a CIELAB chroma $C_{ab}^{*}$ of 6.5, and figure 19 of WO 2020/53140 A1 discloses a CIELAB hue angle $h_{ab}$ of 84°. Converted to CIELAB a*,b* coordinates result in a value for the CIELAB a* coordinate of a* = 0.6 and a value for the CIELAB b* coordinate of b* = 6.5, providing a light yellow residual reflectance colour.

In the interval of angles of incidence limited by the angle of incidence of > 0° and the angle of incidence of 75°, each position of CIELAB a*,b* coordinates for the residual reflectance colour, in the a*, b* plane, has a value D ≥ 0, with D = $b* + 6,5 \cdot a* + 6.5$. In other words, in the interval of angles of incidence limited by the angle of incidence of > 0° and the angle of incidence of 75°, each position of CIELAB a*,b* coordinates for the residual reflectance colour in the a*b* plane is i) on a straight line defined by $b* = -6.5 - a* - 6.5$ or ii) to the right of said straight line defined by $b* = -6.5 - a* - 6.5$, in case CIELAB a* coordinates are on an abscissa with positive CIELAB a* coordinates to the right and CIELAB b* coordinates are on an ordinate above.

Each position of CIELAB a*,b* coordinates is given, in the interval of angles of incidence limited by the angle of >0° and the angle of incidence of 75°, for the residual reflectance colour of the spectacle lens comprising the anti-reflective coating on a single surface thereof.

Although the CIELAB a*,b* coordinates for the residual reflectance colour are given with respect to the spectacle lens comprising the anti-reflective coating on a single surface of the spectacle lens, it shall be understood that the spectacle lens may comprise and preferably comprises said anti-reflective coating on both surfaces of the spectacle lens.

Positioning CIELAB a*,b* coordinates in the interval of angles of incidence limited by the angle of incidence of > 0° and the angle of incidence of 75° in the a*,b* plane such that the value D is greater than or equal to zero, with D = $b* + 6,5 \cdot a* + 6.5$ ensures that the golden residual reflectance colour is maintained for angles of incidence not equal to 0°. Maintaining the golden reflectance colour goes along with the fact that undesired changes in the residual reflectance colour, for example an undesired greenish shimmer, are reduced and found to be acceptable. When looking at higher angles of incidence on the spectacle lens, which is usually the case in everyday life, any deviation from the expected residual reflectance colour, in this case the golden residual reflectance colour, may be perceived as unesthetic, in particular when the golden residual reflectance colour is disturbed by a different residual reflectance colour.

Compared to WO 2020/053140 A1, also aiming at colour stable residual reflectance colours for anti-reflective coatings, the interval of angles of incidence for which a colour stability is observed, is increased.

Preferably, the spectacle lens comprising the anti-reflective coating, said anti-reflective coating comprising the layer stack, the spectacle lens having, in the interval of angles of incidence, the residual reflectance colour in CIE 1976 L*a*b* colour space, is characterized in that in said interval of angles of incidence limited by said angle of incidence of > 0° and said angle of incidence of 75°, each position of CIELAB a*,b* coordinates for said residual reflectance colour, in said a*,b* plane, has a value D1 ≤ 0, with $D_1 = b* + 6.9 \cdot a* - 80$.

Positioning CIELAB a*,b* coordinates in the interval of angles of incidence limited by the angle of incidence of > 0° and the angle of incidence of 75° in the a*,b* plane such that the value $D_1$ is smaller than or equal to zero, with $D_1 = b* + 6.9 \cdot a* - 80$ ensures that the golden residual reflectance colour is maintained for angles of incidence not equal to 0°. Further, maintaining the golden reflectance colour goes along with the fact that undesired changes in the residual reflectance colour, for example an undesired greenish shimmer, are reduced and found to be acceptable while the value $D_1$ smaller than or equal to zero additionally ensures that a rose residual reflectance colour, a pink residual reflectance colour or a reddish residual reflectance colour is avoided. Also, the rose residual reflectance colour, the pink residual reflectance colour or the reddish residual reflectance colour may be perceived as unesthetic when looking at higher angles of incidence on the spectacle lens.

Preferably, the spectacle lens comprising the anti-reflective coating, said anti-reflective coating comprising the layer stack, the spectacle lens having, in the interval of angles of incidence, the residual reflectance colour in CIE 1976 L*a*b* colour space, is characterized in that in said interval of angles of incidence limited by said angle of incidence of > 0° and said angle of incidence of 75°, a position of CIELAB a*,b* coordinates for said residual reflectance colour, in said a*,b* plane, has a value D2 ≥ 0, with $D_2 = b* + 5.5 \cdot a* + 13.75$ and/or a position of CIELAB a*,b* coordinates for said residual reflectance colour lie in said rectangular region in said a*,b* plane.

Positioning CIELAB a*,b* coordinates in the interval of angles of incidence limited by the angle of incidence of > 0° and the angle of incidence of 75° in the a*,b* plane such that the value $D_2$ is greater than or equal to zero, with $D_2 = b* + 5.5 \cdot a* + 13.75$ ensures that the golden residual reflectance colour is maintained for angles of incidence not equal to 0°. Further, maintaining the golden reflectance colour goes along with the fact that undesired changes in the residual reflectance colour, for example an undesired greenish shimmer, are further reduced or completely avoided. This is especially of importance in case variations of layer thicknesses in the layer stack during the manufacturing process may occur.

Preferably, the spectacle lens comprising the anti-reflective coating, said anti-reflective coating comprising the layer stack, the spectacle lens having, in an interval of angles of incidence, the residual reflectance colour in CIE 1976 L*a*b* colour space, is characterized in that in said layer stack a ratio of a sum over layer thicknesses of layers each having a refractive index n > 2.1 at 500 nm to a sum over layer thicknesses of layers each having a refractive index n < 1.6 at 500 nm is in one range selected from

- a ratio of from 0.05 to 0.35
- a ratio of from 0.07 to 0.28
- a ratio of from 0.09 to 0.20
- a ratio of from 0.10 to 0.18.

A layer having the refractive index n > 2.1 at 500 nm preferably comprises one of the following materials: $TiO_2$, $Ta_2O_5$, $Nb_2O_5$.

A layer having the refractive index n < 1.6 at 500 nm preferably comprises one of the following materials: $SiO_2$, mixtures of SiOz and $Al_2O_3$.

Having in said layer stack the ratio of the sum over layer thicknesses of layers each having the refractive index n > 2.1 at 500 nm to the sum over layer thicknesses of layers each having the refractive index n < 1.6 at 500 nm in one of the before mentioned ranges supports that a different residual reflectance colour does not disturb the golden residual reflectance colour of the spectacle lens comprising the anti-reflective coating. An additional benefit of said ratio is that due to a low amount of material having the refractive index n > 2.1 at 500 nm in the layer stack, a visibility of scratches that may occur during usage time of the spectacle lens comprising the anti-reflective coating is reduced.

Preferably, the spectacle lens comprising the anti-reflective coating, said anti-reflective coating comprising the layer stack, the spectacle lens having, in an interval of angles of incidence, the residual reflectance colour in CIE 1976 L*a*b* colour space, is characterized in that in said layer stack the ratio of the sum over layer thicknesses of layers each having the refractive index n > 2.1 at 500 nm to the sum over layer thicknesses of layers each having the refractive index n < 1.6 at 500 nm is in one range selected from

- a ratio of from 0.15 to 0.41
- a ratio of from 0.20 to 0.41
- a ratio of from 0.22 to 0.41
- a ratio of from 0.28 to 0.41,

thereby not considering a maximum layer thickness of a layer having said refractive index n < 1.6 at 500 nm.

As mentioned before, in said layer stack the ratio of the sum over layer thicknesses of layers each having the refractive index n > 2.1 at 500 nm to the sum over layer thicknesses of layers each having the refractive index n < 1.6 at 500 nm in one of the before mentioned range without considering the maximum layer thickness of the layer having said refractive index n < 1.6 at 500 nm supports that the different residual reflectance colour does not disturb the golden residual reflectance colour of the spectacle lens comprising the anti-reflective coating. Again, the additional benefit of said ratio is that due to the low amount of material having the refractive index n > 2.1 at 500 nm in the layer stack, the visibility of scratches that may occur during usage time of the spectacle lens comprising the anti-reflective coating is reduced.

Preferably, the spectacle lens comprising the anti-reflective coating, said anti-reflective coating comprising the layer stack, the spectacle lens having, in an interval of angles of incidence, the residual reflectance colour in CIE 1976 L*a*b* colour space, is characterized in that in said layer stack a layer thickness of at least one layer having a refractive index n of 1.8 < n < 2.2 at 500 nm equals a layer thickness of at least one layer comprising a transparent conductive oxide.

A layer having the refractive index n of $1.8 \leq n \leq 2.2$ at 500 nm preferably comprises ZrOz.

A layer comprising the transparent conductive oxide preferably comprises indium tin oxide (ITO).

Preferably without affecting the golden residual reflectance colour, incorporating the layer stack at least one layer comprising the transparent conductive oxide renders electric anti-static properties to the spectacle lens comprising the anti-reflective coating. When the spectacle lens comprising said anti-reflective coating is for example rubbed with a piece of cotton cloth when the spectacle lens wearer cleans the spectacle lens, the build-up of electric static charges on the spectacle lens comprising said anti-reflective coating is prevented. This avoids the attraction and adherence of dust particles on the surface of the spectacle lens comprising said anti-reflective coating. Determining the layer thickness of said at least one layer comprising the transparent conductive oxide such that it equals the layer thickness of at least one layer having the refractive index n of $1.8 \leq n \leq 2.2$ at 500 nm allows maintaining the golden residual reflectance colour without a need to readjust layer thicknesses of other layers in the layer stack.

The data comprising at least one kind of the following kinds of data:

i) data of the spectacle lens described before, said data of the spectacle lens being configured for the purpose of a use for a manufacture of the spectacle lens described before,
ii) data containing computer-readable instructions for controlling one manufacturing machine or more manufacturing machines to manufacture the spectacle lens described before.

Alternatively or additionally, the data set may comprise data of the spectacle lens described before, said data of the spectacle lens being configured to be fed to one manufacturing machine or more manufacturing machines for manufacturing the spectacle lens described before.

The data set may be stored on a computer-readable storage medium or carried by a data carrier signal. The computer-readable medium may be a non-transitory tangible computer-readable storage medium.

The method configured for calculating, by a computer, data of a spectacle lens, said data of said spectacle lens comprising data of an anti-reflective coating, said data of said anti-reflective coating comprising data of a layer stack, said data of said spectacle lens comprising said data of said anti-reflective coating being configured for the purpose of a use for a manufacture of said spectacle lens comprising said anti-reflective coating, the method comprises the step of:

- determining in said data of said layer stack a layer thickness of each layer of said layer stack such that a calculation of a residual reflectance colour in CIE 1976 L*a*b* for said data of said spectacle lens comprising said data of said layer stack meets a predefined residual reflectance colour in CIE 1976 L*a*b* colour space at predefined angles of incidence,

  the method is characterized in that
  at a predefined angle of incidence of 0°, positions of CIELAB a*,b* coordinates for said predefined residual reflectance colour lie in a rectangular region in an a*,b* plane, said rectangular region in said a*,b* plane being defined by $2 \leq a^* \leq 9.2$ and $7 \leq b^* \leq 16.8$,

  at each predefined angle of incidence lying in an interval of angles of incidence limited by a predefined angle of incidence of greater than 0° and a predefined angle of incidence of 75°, each position of CIELAB a*, b* coordinates for said predefined residual reflectance colour, in said a*,b* plane, has a value $D \geq 0$, with $D = b^* + 6.5 \cdot a^* + 6.5$.

Preferably, in said data of the layer stack, the layer thickness of each layer is determined for a single layer stack. Preferably, in the data of the layer stack, the layers of the layer stack are predefined with respect to their respective refractive index. Preferably, in the data of the layer stack, each layer of the layer stack has a uniform refractive index. Further, in the data of the layer stack, preferably the layer sequence of the layer stack is predefined.

For calculating the residual reflectance colour in CIE 1976 L*a*b* colour space for the data of the spectacle lens comprising the data of the anti-reflective coating, i.e., for calculating positions of CIELAB a*,b* coordinates at predefined angles of incidence, preferably the software Optilayer (OptiLayer, OptiLayer 64 for Windows, Version 14.57, OptiLayer GmbH, Germany) is used. For calculating the position of CIELAB a*,b* coordinates at predefined angles of incidence, data of the spectral reflectance of said data of said spectacle lens comprising said data of said anti-reflective coating is used, the data of the spectral reflectance at predefined angles of incidence being calculated using preferably the software Optilayer (OptiLayer, OptiLayer 64 for Windows, Version 14.57, OptiLayer GmbH, Germany).

Preferably, a use of the data of the spectacle lens comprising the data of the anti-reflective coating for purposes other than the manufacture of the spectacle lens comprising the anti-reflective coating is excluded.

In particular, the method is configured for calculating, by the computer, a design of the spectacle lens, said design of the spectacle lens comprising a design of the anti-reflective coating, said design of said anti-reflective coating comprising a design of a layer stack, said design of said spectacle lens comprising said design of said anti-reflective coating being configured for the purpose of the use for the manufacture of said spectacle lens comprising said anti-reflective coating, the method comprises the step of:

- determining in said design of said layer stack a layer thickness of each layer of said layer stack such that a calculation of a residual reflectance colour in CIE 1976 L*a*b* for said design of said spectacle lens comprising said design of said layer stack meets a predefined residual reflectance colour in CIE 1976 L*a*b* colour space at predefined angles of incidence,

  the method is characterized in that
  at a predefined angle of incidence of 0°, positions of CIELAB a*,b* coordinates for said predefined residual reflectance colour lie in a rectangular region in an a*,b* plane, said rectangular region in said a*,b* plane being defined by $2 \leq a^* \leq 9.2$ and $7 \leq b^* \leq 16.8$,

  at each predefined angle of incidence lying in an interval of angles of incidence limited by a predefined angle of incidence of >0° and a predefined angle of incidence of 75°, each position of CIELAB a*, b* coordinates for said predefined residual reflectance colour, in said a*,b* plane, has a value $D \geq 0$, with $D = b^* + 6.5 \cdot a^* + 6.5$.

Preferably, said design of the spectacle lens is design data of the spectacle lens, the design of the anti-reflective coating is design data of the anti-reflective coating, the design of the layer stack is design data of the layer stack.

Preferably, in the design of the layer stack, the layer thickness of each layer is determined for a single layer stack.

For calculating the residual reflectance colour in CIE 1976 L*a*b* colour space for the design of the spectacle lens comprising the design of the anti-reflective coating, i.e., for calculating positions of CIELAB a*,b* coordinates at predefined angles of incidence, preferably the software Optilayer (OptiLayer, OptiLayer 64 for Windows, Version 14.57, OptiLayer GmbH, Germany) is used. For calculating the position of CIELAB a*,b* coordinates at predefined angles of incidence, data of the spectral reflectance of said design of said spectacle lens comprising said design of said anti-reflective coating is used, the data of the spectral reflectance at predefined angles of incidence being calculated using preferably the software Optilayer (OptiLayer, OptiLayer 64 for Windows, Version 14.57, OptiLayer GmbH, Germany).

Preferably, a use of the design of the spectacle lens comprising the design of the anti-reflective coating for purposes other than the manufacture of the spectacle lens comprising the anti-reflective coating is excluded.

In other words, the method is configured for calculating, by a computer, data of the anti-reflective coating, said data of said anti-reflective coating comprising data of the layer stack, said data of said anti-reflective coating together with data of the spectacle lens being configured for the purpose of the use for the manufacture of said spectacle lens comprising said anti-reflective coating, the method comprises the step of:

- determining in said data of said layer stack, a layer thickness of each layer of said layer stack such that a calculation of a residual reflectance colour in CIE 1976 L*a*b* for said data of said layer stack together with said data of said spectacle lens meets a predefined residual reflectance colour in CIE 1976 L*a*b* colour space at predefined angles of incidence,

the method is characterized in that
at a predefined angle of incidence of 0°, positions of CIELAB a*,b* coordinates for said predefined residual reflectance colour lie in a rectangular region in an a*,b* plane, said rectangular region in said a*,b* plane being defined by $2 \leq a* \leq 9.2$ and $7 \leq b* \leq 16.8$,
at each predefined angle of incidence lying in an interval of angles of incidence limited by a predefined angle of incidence of >0° and a predefined angle of incidence of 75°, each position of CIELAB a*, b* coordinates for said predefined residual reflectance colour, in said a*,b* plane, has a value $D \geq 0$, with $D = b* + 6.5 \cdot a* + 6.5$.

Preferably, the data of the anti-reflective coating comprises data of a single layer stack. Thus, in the data of the layer stack, preferably the layer thickness of each layer is determined for said single layer stack.

Preferably, in the data of the layer stack, the layers of the layer stack are predefined with respect to their respective refractive index. Preferably, in the data of the layer stack, each layer of the layer stack has a uniform refractive index. Further, in the data of the layer stack, preferably the layer sequence of the layer stack is predefined.

Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, is characterized in that said data of said anti-reflective coating is in form of an output file and the output file is configured for a data processing system operating a manufacturing unit for coating a surface of the spectacle lens.

Preferably, the output file is a list of layer thicknesses of each layer of the layer stack. The list is transferred as input to the data processing system operating the manufacturing unit. The manufacturing preferably is a vacuum coating system.

When defining the predefined residual reflectance colour as described before, reference is made to the before given explanation with respect to the spectacle lens. Defining the predefined residual reflectance colour as described before ensures that the golden residual reflectance colour is maintained for angles of incidence not equal to 0°, thereby reducing the greenish shimmer. Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, is characterized in that at each predefined angle of incidence lying in said interval of angles of incidence limited by said predefined angle of incidence of >0° and said predefined angle of incidence of 75°, each position of CIELAB a*,b* coordinates for said predefined residual reflectance colour, in said a*,b* plane, has a value $D_1 \leq 0$, with $D_1 = b* + 6.9 \cdot a* - 80$.

When defining the predefined residual reflectance colour as described before, reference is made to the before given explanation with respect to the spectacle lens. Defining the predefined residual reflectance colour as described before ensures that the golden residual reflectance colour is maintained for angles of incidence not equal to 0°, thereby reducing the greenish shimmer and avoiding the rose residual reflectance colour, the pink residual reflectance colour or the reddish residual reflectance colour.

Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, is characterized in that at each predefined angle of incidence lying in said interval of angles of incidence limited by said predefined angle of incidence of >0° and said predefined angle of incidence of 75°, a position of CIELAB a*,b* coordinates for said predefined residual reflectance colour, in said a*,b* plane, has a value $D_2 \geq 0$, with $D_2 = b* + 5.5 \cdot a* + 13.75$ and/ or a position of CIELAB a*,b* coordinates for said predefined residual reflectance colour lie in said rectangular region in said a*,b* plane.

When defining the predefined residual reflectance colour as described before, reference is made to the before given explanation with respect to the spectacle lens. Defining the predefined residual reflectance colour as described before further reduces the greenish shimmer which is undesired for the golden residual reflectance colour.

Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, is characterized in the step of:

- determining said layer stack such that a ratio of a sum over layer thicknesses of layers each having a refractive index n > 2.1 at 500 nm to a sum over layer thicknesses of layers each having a refractive index n < 1.6 at 500 nm is in one range selected from
- a ratio of from 0.05 to 0.35
- a ratio of from 0.07 to 0.28
- a ratio of from 0.09 to 0.20
- a ratio of from 0.10 to 0.18.

When determining the ratio as described before, reference is made to the explanation given before for the respective ratio with respect to the spectacle lens.

Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, is characterized in the step of

- determining said layer stack such that a ratio of a sum over layer thicknesses of layers each having a refractive index n > 2.1 at 500 nm to a sum over layer thicknesses of layers each having a refractive index n < 1.6 at 500 nm is in one range selected from
- a ratio of from 0.15 to 0.41
- a ratio of from 0.20 to 0.41
- a ratio of from 0.22 to 0.41
- a ratio of from 0.28 to 0.41,

thereby not considering a maximum layer thickness of a layer having said refractive index n < 1.6 at 500 nm.

When determining the ratio as described before, reference is made to the explanation given before for the respective ratio with respect to the spectacle lens.

Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, is characterized in the step of:

- determining said layer stack such that a layer thickness of at least one layer having a refractive index n of $1.8 \leq n \leq 2.2$ at 500 nm equals a layer thickness of at least one layer comprising a transparent conductive oxide.

When incorporating at least one layer comprising a transparent conductive oxide in the layer stack as described before, reference is made to the respective explanation given before with respect to the spectacle lens.

Preferably, the method configured for calculating, by the computer, data of the spectacle lens, said data of said spectacle lens comprising data of the anti-reflective coating, said data of said anti-reflective coating comprising data of the layer stack, said data of said spectacle lens comprising said data of said anti-reflective coating being configured for the purpose of the use for the manufacture of said spectacle lens comprising said anti-reflective coating, further comprises the step of manufacturing said spectacle lens comprising said anti-reflective coating based on said data of said spectacle lens comprising said data of said anti-reflective coating.

Preferably, the anti-reflective coating is applied to the surface of the spectacle lens by physical vapour deposition.

The computer program comprises instructions which, when the program is executed by a computer, cause the computer to carry out the method described before.

The computer program may be stored on a non-transitory tangible computer-readable storage medium, the computer program comprising instructions which, when the program is executed by a computer, cause the computer to carry out the method described before.

The computer is configured to perform the method described before.

A data processing system comprising a processor and a storage medium coupled to the processor, wherein the processor is adapted to perform the method described before based on a computer program stored on the storage medium.

A computer-readable storage medium has stored thereon the computer program described before. The computer-readable storage medium may be a non-transitory tangible computer-readable storage medium.

A data carrier signal carries the computer program described before.

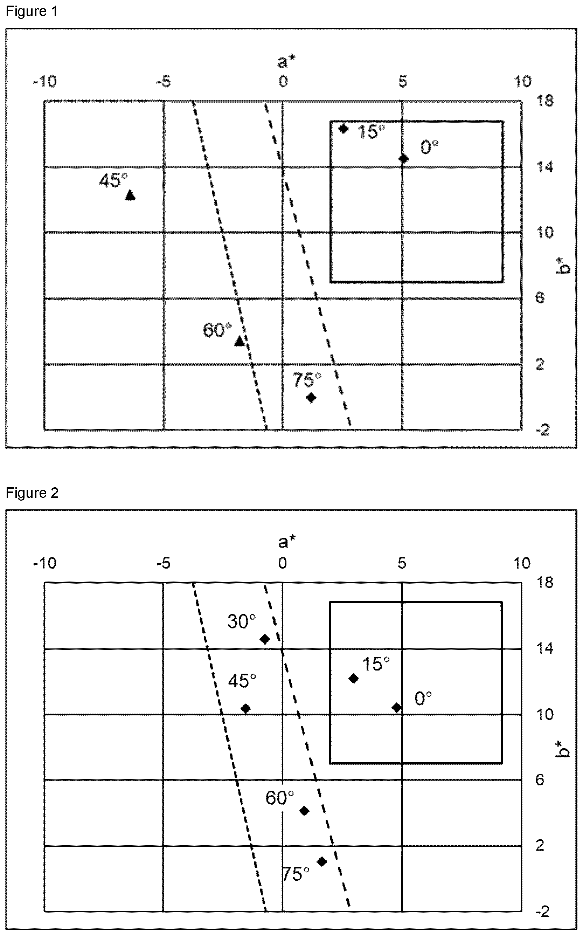

Figure 1 shows CIELAB a\*, b\* coordinates for the spectacle lens of comparative example 1. In Figure 1 at angles of incidence of 45° and 60°, positions CIELAB a\*, b\* coordinates are to the left of the short-broken line, i.e. $D \leq 0$, with $D = b^* + 6.5 \cdot a^* + 6.5$. At angles of incidence of 0° and 15°, positions CIELAB a\*, b\* coordinates lie in the rectangular region in the a\*,b\* plane, the rectangular region in the a\*,b\* plane defined by $2 \leq a^* \leq 9.2$ and $7 \leq b^* \leq 16.8$.

Figure 2 shows CIELAB a\*, b\* coordinates for the spectacle lens of example 1. In Figure 2 at angles of incidence of 0°, 15°, 30°, 45°, 60°, 75°, positions CIELAB a\*, b\* coordinates are to the right of the short-broken line, i.e. $D \geq 0$, with $D = b^* + 6.5 \cdot a^* + 6.5$. At angles of incidence of 0° and 15°, positions CIELAB a\*, b\* coordinates additionally lie in the rectangular region in the a\*,b\* plane, the rectangular region in the a\*,b\* plane defined by $2 \leq a^* \leq 9.2$ and $7 \leq b^* \leq 16.8$.

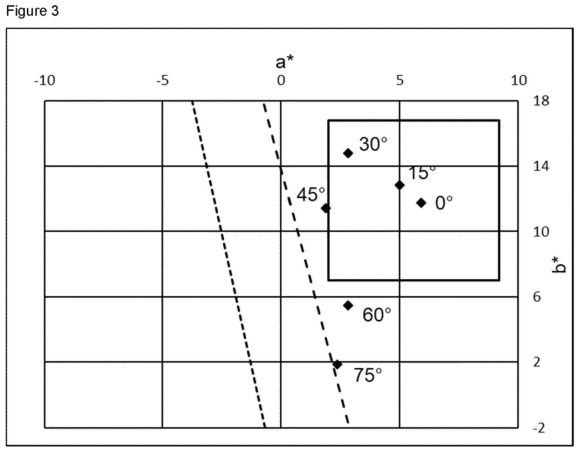

Figure 3 shows CIELAB a\*, b\* coordinates for the spectacle lens of example 1. In Figure 3 at angles of incidence of 0°, 15°, 30°, 45°, 60°, 75°, positions CIELAB a\*, b\* coordinates are to the right of the long-broken line, i.e. $D_2 \geq 0$, with $D_2 = b^* + 5.5 \cdot a^* + 13.75$. At angles of incidence of 0°, 15°, and 30° positions CIELAB a\*, b\* coordinates additionally lie in the rectangular region in the a\*,b\* plane, the rectangular region in the a\*,b\* plane defined by $2 \leq a^* \leq 9.2$ and $7 \leq b^* \leq 16.8$.

**I Simulation of the anti-reflective coating for the spectacle lens**

A layer sequence of the layers within the layer stack was selected. This layer sequence is known to deliver satisfactory mechanical properties to be used in an anti-reflective coating for spectacle lenses.

Table 1

| Layer sequence | Layer material |
|---|---|
| - | Hard coating |
| L1 | $ZrO_2$ |
| L2 | $SiO_2$ |
| L3 | $TiO_2$ |
| L4 | $SiO_2$ |
| L5 | $TiO_2$ |
| L6 | $SiO_2$ |
| L7 | ITO |
| L8 | $TiO_2$ |
| L9 | $SiO_2$ |
| L10 | Clean coating |

Comparative example 1:

Starting from the layer sequence in the Table 1 above the thicknesses for the layers L1 to L9 have been determined in a way that the spectral reflectance at an angle of incidence of 0° is, in CIE 1976 L\*a\*b\* colour space, in a rectangular region in an a\*,b\* plane defined by $2 \leq a^* \leq 9.2$ and $7 \leq b^* \leq 16.8$. This was done using the software Optilayer (OptiLayer, OptiLayer 64 for Windows, Version 14.57, OptiLayer GmbH, Germany). The layer thickness of L10 was kept constant at 5 nm. When giving the software the target value range for the residual reflectance colour at 0° angle of incidence, the optimization methods provided by the software resulted in a set of layer thicknesses L1 to L9. Using these thicknesses the reflected colour under oblique angles of incidence was calculated using the software. This was done for angles of incidence (aoi) between aoi=15° to aoi=75°. The values for the layer thickness set L1 to L9 of comparative example 1 are given in Table 2. As can be seen in Figure 1, the positions of the CIELAB a*,b* coordinates in the a*,b* plane at angles of incidence aoi=45° and aoi= 60° are on the left side of the straight line defined by the equation b*+6.5-a*+6.5=0, this means that the value of the function D= b*+6.5-a*+6.5 is smaller than 0.

As a result of positions of the CIELAB a*,b* coordinates in the a*,b* plane being on the left side of said straight line, the spectacle lenses comprising said layer stack will show a greenish shimmer at these angles of incidence.

Example 1:

The inventors found out that by a simple modification of the layer sequence of comparative example 1 the CIELAB a*,b* coordinates of a modified layer sequence fulfil the condition D >0 (D= b*+6.5-a*+6.5) meaning that the CIELAB coordinates a*,b* of the residual reflectance colour now lie on the right side of the straight line defined by b*+6.5-a* +6.5=0. As a result of this no greenish shimmer is observed under oblique angles of incidence. Surprisingly, this advantageous result was obtained by a modification of the layer thickness of one layer alone, by changing the layer thickness of L1 from 6 nm to 3 nm.

Comparative example 2 to comparative example 4:

The layer thicknesses of comparative example 2, comparative example 3, comparative example 4 have been obtained in the same approach as for comparative example 1.

Example 2 to example 17:

Based on the finding of example 1, the layer thickness of L1 was chosen to be 3 nm for the examples 2 to 17. The layer thickness L10 was kept constant as well. The same approach as for comparative example 1 was used to find the sets of layer thicknesses. A selection of the results obtained by computer optimization resulted in the examples 2 to 17, all fulfil the condition D >0 (D = b*+6.5-a*+6.5) meaning that the CIELAB coordinates a*,b* of the residual reflectance colour now lie on the right side of the straight line defined by b*+6.5-a*+6.5=0, as well as in the rectangular region defined before at aoi=0°.

In the following Tables 2 to 6 the resulting layer thicknesses are shown. In Table 2 and Table 3 the layer thicknesses for spectacle lenses based on an optical material with a refractive index of 1.5 and a hard coating with refractive index 1.48 are given. In Table 4, Table 5 and Table 6 the results for the spectacle lenses based on an optical material with a refractive index of with a refractive index of 1.6 and a hard coating with refractive index 1.58 are given.

Table 2:

| Layer | Spectacle lens according to example, comparative example, all values in nm | | | | |
| --- | --- | --- | --- | --- | --- |
| | comparative example 1 | example 1 | comparative example 2 | example 2 | example 3 |
| ZrO$_2$ | 6.0 | 3.0 | 3.0 | 3.0 | 3.0 |
| SiO$_2$ | 219.2 | 219.2 | 230.2 | 219.7 | 226.6 |
| TiO$_2$ | 8.4 | 8.4 | 15.0 | 7.8 | 11.0 |
| SiO$_2$ | 43.5 | 43.5 | 30.3 | 45.1 | 43.9 |
| TiO$_2$ | 12.5 | 12.5 | 97.0 | 18.9 | 28.7 |
| SiO$_2$ | 32.0 | 32.0 | 7.4 | 30.7 | 24.6 |
| ITO | 3.0 | 3.0 | 3.0 | 3.0 | 3.0 |
| TiO$_2$ | 16.9 | 16.9 | 5.1 | 18.8 | 26.0 |
| SiO$_2$ | 93.1 | 93.1 | 61.9 | 84.3 | 80.4 |
| Clean coating | 5.0 | 5.0 | 5.0 | 5.0 | 5.0 |

(continued)

| Layer | Spectacle lens according to example, comparative example, all values in nm | | | | |
|---|---|---|---|---|---|
| | comparative example 1 | example 1 | comparative example 2 | example 2 | example 3 |
| Layer stack thickness | 439.5 | 436.5 | 457.9 | 436.3 | 452.3 |
| $\Sigma TiO_2$ layer thicknesses | 37.8 | 37.8 | 117.1 | 45.5 | 65.7 |
| $\Sigma SiO_2$ layer thicknesses | 387.8 | 387.8 | 329.8 | 379.8 | 375.6 |
| $\Sigma SiO_2$ layer thickness w/o 1. $SiO_2$ | 168.6 | 168.6 | 99.6 | 160.0 | 149.0 |
| Ratio $\Sigma TiO_2/\Sigma SiO2$ w/o 1. $SiO_2$ | 0.22 | 0.22 | 1.18 | 0.28 | 0.44 |
| Ratio $\Sigma TiO_2/\Sigma SiO2$ | 0.10 | 0.10 | 0.36 | 0.12 | 0.17 |

Table 3:

| Layer | Spectacle lens according to example, all values in nm | | | |
|---|---|---|---|---|
| | example 4 | example 5 | example 6 | example 7 |
| $ZrO_2$ | 3.0 | 3.0 | 3.0 | 3.0 |
| $SiO_2$ | 209.9 | 203.8 | 214.1 | 219.5 |
| $TiO_2$ | 9.2 | 9.0 | 9.1 | 6.6 |
| $SiO_2$ | 47.7 | 47.9 | 44.4 | 46.5 |
| $TiO_2$ | 27.8 | 28.1 | 21.4 | 16.4 |
| $SiO_2$ | 27.2 | 27.7 | 27.2 | 34.1 |
| ITO | 3.0 | 3.0 | 3.0 | 3.0 |
| $TiO_2$ | 27.1 | 28.1 | 20.3 | 17.2 |
| $SiO_2$ | 81.8 | 80.8 | 83.2 | 85.3 |
| Clean coating | 5.0 | 5.0 | 5.0 | 5.0 |
| | | | | |
| Layer stack thickness | 441.8 | 436.3 | 430.8 | 436.6 |
| $\Sigma TiO_2$ layer thicknesses | 64.1 | 65.1 | 50.9 | 40.2 |
| $\Sigma SiO_2$ layer thicknesses | 366.7 | 360.2 | 369.0 | 385.4 |
| $\Sigma SiO_2$ layer thickness w/o 1. $SiO_2$ | 156.7 | 156.4 | 154.9 | 165.9 |
| Ratio $\Sigma TiO_2/\Sigma SiO2$ w/o 1. $SiO_2$ | 0.41 | 0.42 | 0.33 | 0.24 |
| Ratio $\Sigma TiO_2/\Sigma SiO2$ | 0.17 | 0.18 | 0.14 | 0.10 |

Table 4:

| Layer | Spectacle lens according to example, comparative example, all values in nm | | | | |
|---|---|---|---|---|---|
| | comparative example 3 | comparative example 4 | example 8 | example 9 | example 10 |
| $ZrO_2$ | 6.0 | 3.0 | 3.0 | 3.0 | 3.0 |
| $SiO_2$ | 204.1 | 204.1 | 170.6 | 188.0 | 202.7 |
| $TiO_2$ | 12.6 | 12.6 | 3.5 | 10.5 | 12.5 |
| $SiO_2$ | 39.7 | 39.7 | 34.6 | 36.5 | 41.8 |
| $TiO_2$ | 17.3 | 17.3 | 10.7 | 25.0 | 15.8 |
| $SiO_2$ | 27.7 | 27.7 | 27.6 | 22.7 | 12.6 |

(continued)

| Spectacle lens according to example, comparative example, all values in nm | | | | | |
|---|---|---|---|---|---|
| Layer | comparative example 3 | comparative example 4 | example 8 | example 9 | example 10 |
| ITO | 3.0 | 3.0 | 3.0 | 3.0 | 3.0 |
| $TiO_2$ | 14.3 | 14.3 | 7.8 | 22.0 | 9.4 |
| $SiO_2$ | 91.0 | 91.0 | 81.4 | 79.8 | 85.2 |
| Clean coating | 5.0 | 5.0 | 5.0 | 5.0 | 5.0 |
| | | | | | |
| Layer stack thickness | 420.7 | 417.7 | 347.2 | 395.4 | 390.9 |
| $\Sigma TiO_2$ layer thicknesses | 44.2 | 44.2 | 21.9 | 57.5 | 37.6 |
| $\Sigma SiO_2$ layer thicknesses | 362.6 | 362.6 | 314.2 | 326.9 | 342.3 |
| $\Sigma SiO_2$ layer thickness w/o 1. $SiO_2$ | 158.4 | 158.4 | 143.6 | 139.0 | 139.6 |
| Ratio $\Sigma TiO_2/\Sigma SiO_2$ w/o 1. $SiO_2$ | 0.28 | 0.28 | 0.15 | 0.41 | 0.27 |
| Ratio $\Sigma TiO_2/\Sigma SiO_2$ | 0.12 | 0.12 | 0.07 | 0.18 | 0.11 |

Table 5:

| Spectacle lens according to example, all values in nm | | | | | |
|---|---|---|---|---|---|
| Layer | example 11 | example 12 | example 13 | example 14 | example 15 |
| $ZrO_2$ | 3.0 | 3.0 | 3.0 | 3.0 | 3.0 |
| $SiO_2$ | 205.0 | 196.4 | 205.0 | 209.1 | 210.3 |
| $TiO_2$ | 12.6 | 10.5 | 12.6 | 13.7 | 11.8 |
| $SiO_2$ | 40.7 | 37.0 | 40.7 | 41.0 | 40.7 |
| $TiO_2$ | 14.4 | 25.0 | 14.4 | 10.1 | 10.2 |
| $SiO_2$ | 13.5 | 22.7 | 13.5 | 9.5 | 13.6 |
| ITO | 3.0 | 3.0 | 3.0 | 3.0 | 3.0 |
| $TiO_2$ | 10.4 | 22.0 | 10.4 | 12.3 | 12.3 |
| $SiO_2$ | 85.2 | 79.8 | 83.6 | 88.5 | 89.6 |
| Clean coating | 5.0 | 5.0 | 5.0 | 5.0 | 5.0 |
| | | | | | |
| Layer stack thickness | 392.9 | 404.4 | 391.3 | 395.3 | 399.4 |
| $\Sigma TiO_2$ layer thicknesses | 37.4 | 57.5 | 37.4 | 36.1 | 34.3 |
| $\Sigma SiO_2$ layer thicknesses | 344.5 | 335.9 | 342.9 | 348.1 | 354.2 |
| $\Sigma SiO_2$ layer thickness w/o 1. $SiO_2$ | 139.5 | 139.5 | 137.9 | 139.1 | 143.8 |
| Ratio $\Sigma TiO_2/\Sigma SiO2$ w/o 1. $SiO_2$ | 0.27 | 0.41 | 0.27 | 0.26 | 0.24 |
| Ratio $\Sigma TiO_2/\Sigma SiO_2$ | 0.11 | 0.17 | 0.11 | 0.10 | 0.10 |

Table 6:

| Spectacle lens according to example, all values in nm | | |
|---|---|---|
| Layer | example 16 | example 17 |
| $ZrO_2$ | 3.0 | 3.0 |
| $SiO_2$ | 210.9 | 207.6 |

(continued)

| Spectacle lens according to example, all values in nm | | |
|---|---|---|
| Layer | example 16 | example 17 |
| $TiO_2$ | 12.0 | 11.0 |
| $SiO_2$ | 41.0 | 38.5 |
| $TiO_2$ | 8.3 | 9.7 |
| $SiO_2$ | 12.8 | 15.1 |
| ITO | 3.0 | 3.0 |
| $TiO_2$ | 13.2 | 11.9 |
| $SiO_2$ | 90.3 | 86.5 |
| Clean coating | 5.0 | 5.0 |
| | | |
| Layer stack thickness | 399.5 | 391.3 |
| $\Sigma TiO_2$ layer thicknesses | 33.5 | 32.6 |
| $\Sigma SiO_2$ layer thicknesses | 355.0 | 347.7 |
| $\Sigma SiO_2$ layer thickness w/o 1. $SiO_2$ | 144.1 | 140.1 |
| Ratio $\Sigma TiO_2/\Sigma SiO2$ w/o 1. $SiO_2$ | 0.23 | 0.23 |
| Ratio $\Sigma TiO_2/\Sigma SiO_2$ | 0.09 | 0.09 |

**II Method of manufacturing the spectacle lenses**

Examples 1 to 3, 6, 8, 9, 12, 14 and comparative examples 1 to 4

The layer sequence of examples 1 to 3, 6, 8, 9, 12, 14 and of comparative examples 1 to 4 was deposited on respective spectacle lens coated with a polysiloxane hard coating by electron beam evaporation in a Bühler Leybold Optics Syrus 1100 vacuum coater (Bühler Leybold Optics, Alzenau, Germany) equipped with an Mark2+ ion source (Veeco, Plainview, US). The layer sequence of the spectacle lenses according to the examples and comparative examples are described before with respect to Tables 2 to 6.
The layer materials $SiO_2$, $ZrO_2$, ITO (indium tin oxide) and $TiO_2$ have been placed in different crucible positions of the electron beam evaporator of the vacuum coater.
The layer sequence was entered into the control software of the vacuum coater.
Then the spectacle lens was placed in the substrate holder of the vacuum coater and the chamber was evacuated down to a pressure of $2 \cdot 10^{-5}$ mbar. In a first step the surface of the spectacle lens was treated in the vacuum chamber with an ion pre-treat process (IPC). The ion source available in the vacuum chamber was switched on. As a result Ar+ Ions with an energy of approximately 120eV with an ion current density of 80 $\mu A/cm^2$ reach the surface of the spectacle lens. This ion treatment was done for 60s. Then the ion source was switched off and the deposition of the layer sequence began. The layers of the layer stack have been deposited in the sequence and with thicknesses as indicated in the Tables 2 to 6 using the following deposition rates: $ZrO_2$: 0.35 nm/s, $SiO_2$: 1.0 nm/s, $TiO_2$: 0.3 nm/s and ITO: 0.15nm/s. The ion source was switched on during the deposition of $TiO_2$ and with $O_2$ gas. The ion source was also switched on during the deposition of the ITO layer operating with Ar gas and additional reactive gas $O_2$ in the chamber. The respective ion current densities are around 40 $\mu A/cm^2$ at the surface of the spectacle lenses.
After the completion of the deposition of the layer stack the chamber was vented to reach atmospheric pressure.
The spectacle lenses had a spherical power of -2D.

**III Characterization of the spectacle lenses**

IIIa Visual assessment

The spectacle lenses according to the examples and comparative examples have been inspected visually under an illumination that is close to standard D65 illuminant (Osram Dulux L 36W/954, Osram GmbH, Germany) for detecting the greenish shimmer by an inspection person. In a first step, the spectacle lenses had been looked on from top to check the colour impression close to 0° angle of incidence. In a second step, the spectacle lenses had been tilted and looked at under oblique angle of incidence. The appearance of greenish shimmer was rated by visual perception of the inspection person to be acceptable or not. The visual inspection of all spectacle lenses according to the examples were rated to show no greenish shimmer under oblique incidence.

IIIb Spectral reflectance and residual reflectance colour at angle of incidence of 0°

The spectral reflectance in the wavelength interval between 250nm and 1000nm of the spectacle lenses according to example 1, was measured at an angle of incidence of 0° using the instrument F10-AR, Filmetrics, USA. The spectral reflectance of the respective layer stack was also calculated and compared to the measured spectral reflectance using the software OptiRE (OptiRe 64 for Windows, Version 14.57, OptiLayer GmbH, Germany). The difference between the calculated and measured spectrum was rated via the discrepancy function D offered by the software. A value of D<5 was rated as satisfactory agreement between measurement and calculated spectral reflectance. From the data of the spectral reflectance the CIELAB light L* and the CIELAB a*,b* coordinates have been calculated using the software OptiRE (OptiRe 64 for Windows, Version 14.57, OptiLayer GmbH, Germany). For the calculation the illuminant D65 and the 10° observer have been selected from the calculation options offered by the software. The CIELAB a*,b* coordinates of example 1 calculated from the measured spectral reflectance have been compared with the target range for the residual reflectance colour in the before described rectangular region in the a*,b* plane. It was found that the CIELAB a*,b* coordinates lie well within the target range. Summing up, example 1 fulfils the requirements for the residual reflectance colour and does not show greenish shimmer in the visual inspection under oblique angles of incidence.

**Claims**

1.  Spectacle lens comprising an anti-reflective coating, the anti-reflective reflective coating as defined in ISO 13666:2019(E), entry 3.18.3, said anti-reflective coating comprising a layer stack, said spectacle lens having, in an interval of angles of incidence, a residual reflectance colour in CIE 1976 L*a*b* colour space,
    **characterized in that**

    at an angle of incidence of 0°, positions of CIELAB a*,b* coordinates for said residual reflectance colour lie in a rectangular region in an a*,b* plane, said rectangular region in said a*,b* plane being defined by $2 \leq a^* \leq 9.2$ and $7 \leq b^* \leq 16.8$,
    in an interval of angles of incidence limited by an angle of incidence of > 0° and an angle of incidence of 75°, each position of CIELAB a*, b* coordinates for said residual reflectance colour, in said a*,b* plane, has a value $D \geq 0$, with $D = b^* + 6.5 \cdot a^* + 6.5$,
    the CIELAB a*,b* coordinates are determined with respect to a single surface of said spectacle lens comprising said anti-reflective coating.

2.  Spectacle lens according to claim 1, **characterized in that** in said interval of angles of incidence limited by said angle of incidence of > 0° and said angle of incidence of 75°, each position of CIELAB a*,b* coordinates for said residual reflectance colour, in said a*,b* plane, has a value $D_1 \leq 0$, with $D_1 = b^* + 6.9 \cdot a^* - 80$.

3.  Spectacle lens according to any one of the preceding claims, **characterized in that** in said interval of angles of incidence limited by said angle of incidence of > 0° and said angle of incidence of 75°, a position of CIELAB a*,b* coordinates for said residual reflectance colour, in said a*,b* plane, has a value $D_2 \geq 0$, with $D_2 = b^* + 5.5 \cdot a^* + 13.75$ and/or a position of CIELAB a*,b* coordinates for said residual reflectance colour lie in said rectangular region in said a*,b* plane.

4.  Spectacle lens according to any one of the preceding claims, **characterized in that** in said layer stack a ratio of a sum over layer thicknesses of layers each having a refractive index n > 2.1 at 500 nm to a sum over layer thicknesses of layers each having a refractive index n < 1.6 at 500 nm is in one range selected from

    - a ratio of from 0.05 to 0.35
    - a ratio of from 0.07 to 0.28
    - a ratio of from 0.09 to 0.20
    - a ratio of from 0.10 to 0.18.

**5.** Spectacle lens according to any one of the preceding claims, **characterized in that** in said layer stack a layer thickness of at least one layer having a refractive index n of $1.8 \leq n \leq 2.2$ at 500 nm equals a layer thickness of at least one layer comprising a transparent conductive oxide.

**6.** Data set comprising at least one kind of the following kinds of data:

i) data of the spectacle lens according to any of the preceding claims 1 to 5, said data of the spectacle lens being configured for the purpose of a use for a manufacture of the spectacle lens according to any of the preceding claims 1 to 5,
ii) data containing computer-readable instructions for controlling one manufacturing machine or more manufacturing machines to manufacture the spectacle lens according to any of the preceding claims 1 to 5.

**7.** Method configured for calculating, by a computer, data of a spectacle lens, said data of said spectacle lens comprising data of an anti-reflective coating, said data of said anti-reflective coating comprising data of a layer stack, said data of said spectacle lens comprising said data of said anti-reflective coating being configured for the purpose of a use for a manufacture of said spectacle lens comprising said anti-reflective coating, the method comprises the step of:

- determining in said data of said layer stack a layer thickness of each layer of said layer stack such that a calculation of a residual reflectance colour in CIE 1976 L\*a\*b\* for said data of said spectacle lens comprising said data of said layer stack meets a predefined residual reflectance colour in CIE 1976 L\*a\*b\* colour space at predefined angles of incidence,
the method is **characterized in that**
at a predefined angle of incidence of 0°, positions of CIELAB a\*,b\* coordinates for said predefined residual reflectance colour lie in a rectangular region in an a\*,b\* plane, said rectangular region in said a\*,b\* plane being defined by $2 \leq a^* \leq 9.2$ and $7 \leq b^* \leq 16.8$,
at each predefined angle of incidence lying in an interval of angles of incidence limited by a predefined angle of incidence of greater than 0° and a predefined angle of incidence of 75°, each position of CIELAB a\*, b\* coordinates for said predefined residual reflectance colour, in said a\*,b\* plane, has a value $D \geq 0$, with $D = b^* + 6.5 \cdot a^* + 6.5$.

**8.** Method according to claim 7, **characterized in that** said data of said anti-reflective coating is in form of an output file and the output file is configured for a data processing system operating a manufacturing unit for coating a surface of the spectacle lens.

**9.** Method according to any one of the preceding claims 7 and 8, **characterized in that** at each predefined angle of incidence lying in said interval of angles of incidence limited by said predefined angle of incidence of >0° and said predefined angle of incidence of 75°, each position of CIELAB a\*,b\* coordinates for said predefined residual reflectance colour, in said a\*,b\* plane, has a value $D_1 \leq 0$, with $D_1 = b^* + 6.9 \cdot a^* - 80$.

**10.** Method according to any one of the preceding claim 7 to 9, **characterized in that** at each predefined angle of incidence lying in said interval of angles of incidence limited by said predefined angle of incidence of >0° and said predefined angle of incidence of 75°, a position of CIELAB a\*,b\* coordinates for said predefined residual reflectance colour, in said a\*,b\* plane, has a value $D_2 \geq 0$, with $D_2 = b^* + 5.5 \cdot a^* + 13.75$ and/ or a position of CIELAB a\*,b\* coordinates for said predefined residual reflectance colour lie in said rectangular region in said a\*,b\* plane.

**11.** Method according to any one of the preceding claims 7 to 10, **characterized in** the step of:

- determining said layer stack such that a ratio of a sum over layer thicknesses of layers each having a refractive index n > 2.1 at 500 nm to a sum over layer thicknesses of layers each having a refractive index n < 1.6 at 500 nm is in one range selected from
- a ratio of from 0.05 to 0.35
- a ratio of from 0.07 to 0.28
- a ratio of from 0.09 to 0.20
- a ratio of from 0.10 to 0.18.

**12.** Method according to any one of the preceding claims 7 to 11, **characterized in** the step of:

- determining said layer stack such that a layer thickness of at least one layer having a refractive index n of $1.8 \leq n \leq$

2.2 at 500 nm equals a layer thickness of at least one layer comprising a transparent conductive oxide.

13. Method according to any one of the preceding claims 7 to 12, the method further comprising the step of manufacturing said spectacle lens comprising said anti-reflective coating based on said data of said spectacle lens comprising said data of said anti-reflective coating.

14. Computer program comprising instructions which, when the program is executed by a computer, cause the computer to carry out the method of any one of the preceding claims 7 to 12.

15. Computer configured to perform the method according to any one of the preceding claims 7 to 12.

Figure 1

Figure 2

Figure 3

**EUROPEAN SEARCH REPORT**

Application Number

EP 25 15 5077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/235020 A1 (BOLSHAKOV ILYA [US]) 17 August 2017 (2017-08-17) * paragraphs [0057], [0059]; figure 2 * ----- | 1-15 | INV. G02B1/115 G02B1/116 G02C7/10 |
| A | US 2022/251396 A1 (AMIN JAYMIN [US] ET AL) 11 August 2022 (2022-08-11) * paragraphs [0085] - [0088] * ----- | 1-15 | |
| A,D | WO 2020/053140 A1 (RODENSTOCK GMBH [DE]) 19 March 2020 (2020-03-19) * the whole document * ----- | 1-15 | |
| A | US 2018/321514 A1 (CARREGA AUDE [FR] ET AL) 8 November 2018 (2018-11-08) * paragraphs [0039] - [0041] * ----- | 1-15 | |
| A | US 2019/179550 A1 (HART SHANDON DEE [US] ET AL) 13 June 2019 (2019-06-13) * paragraphs [0222] - [0224] * ----- | 1-15 | |

TECHNICAL FIELDS
SEARCHED (IPC)

G02B
G02C

The present search report has been drawn up for all claims

| Place of search | Date of completion of the search | Examiner |
|---|---|---|
| Munich | 17 April 2025 | Mollenhauer, Ralf |

EPO FORM 1503 03.82 (P04C01)

## ANNEX TO THE EUROPEAN SEARCH REPORT
## ON EUROPEAN PATENT APPLICATION NO.

EP 25 15 5077

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | | | Publication date | Patent family member(s) | | | Publication date |
|---|---|---|---|---|---|---|---|
| US 2017235020 | A1 | | 17-08-2017 | BR | 112017002815 | A2 | 19-12-2017 |
| | | | | CA | 2958427 | A1 | 25-02-2016 |
| | | | | CN | 106662671 | A | 10-05-2017 |
| | | | | EP | 2988153 | A1 | 24-02-2016 |
| | | | | US | 2017235020 | A1 | 17-08-2017 |
| | | | | WO | 2016026808 | A1 | 25-02-2016 |
| US 2022251396 | A1 | | 11-08-2022 | CN | 107076875 | A | 18-08-2017 |
| | | | | CN | 114460671 | A | 10-05-2022 |
| | | | | EP | 3142979 | A1 | 22-03-2017 |
| | | | | EP | 3901111 | A1 | 27-10-2021 |
| | | | | JP | 2017515780 | A | 15-06-2017 |
| | | | | KR | 20170007384 | A | 18-01-2017 |
| | | | | TW | 201546480 | A | 16-12-2015 |
| | | | | TW | 202131022 | A | 16-08-2021 |
| | | | | US | 2015322270 | A1 | 12-11-2015 |
| | | | | US | 2022251396 | A1 | 11-08-2022 |
| | | | | WO | 2015175390 | A1 | 19-11-2015 |
| WO 2020053140 | A1 | | 19-03-2020 | AU | 2019339724 | A1 | 08-04-2021 |
| | | | | BR | 112021004390 | A2 | 20-07-2021 |
| | | | | CL | 2021000581 | A1 | 01-10-2021 |
| | | | | DE | 102018122444 | A1 | 19-03-2020 |
| | | | | EP | 3850406 | A1 | 21-07-2021 |
| | | | | EP | 4293411 | A2 | 20-12-2023 |
| | | | | EP | 4502702 | A2 | 05-02-2025 |
| | | | | ES | 2966049 | T3 | 18-04-2024 |
| | | | | JP | 7252324 | B2 | 04-04-2023 |
| | | | | JP | 2022500690 | A | 04-01-2022 |
| | | | | PH | 12021550486 | A1 | 18-10-2021 |
| | | | | US | 2022050227 | A1 | 17-02-2022 |
| | | | | WO | 2020053140 | A1 | 19-03-2020 |
| US 2018321514 | A1 | | 08-11-2018 | BR | 112018008631 | A2 | 30-10-2018 |
| | | | | CA | 3003963 | A1 | 11-05-2017 |
| | | | | CN | 108351536 | A | 31-07-2018 |
| | | | | EP | 3371646 | A1 | 12-09-2018 |
| | | | | JP | 2018536894 | A | 13-12-2018 |
| | | | | KR | 20180078249 | A | 09-07-2018 |
| | | | | US | 2018321514 | A1 | 08-11-2018 |
| | | | | WO | 2017077358 | A1 | 11-05-2017 |
| US 2019179550 | A1 | | 13-06-2019 | CN | 209690550 | U | 26-11-2019 |
| | | | | CN | 215340409 | U | 28-12-2021 |
| | | | | EP | 3622332 | A2 | 18-03-2020 |
| | | | | JP | 7292214 | B2 | 16-06-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 5077

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | | Publication date |
|---|---|---|---|---|
| | | JP | 2020519948 A | 02-07-2020 |
| | | KR | 20200003893 A | 10-01-2020 |
| | | KR | 20230038317 A | 17-03-2023 |
| | | TW | 201901190 A | 01-01-2019 |
| | | US | 2018321425 A1 | 08-11-2018 |
| | | US | 2019179550 A1 | 13-06-2019 |
| | | WO | 2019027526 A2 | 07-02-2019 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020053140 A1
- WO 202053140 A1